# EUROPEAN PATENT APPLICATION

(11) **EP 4 708 222 A1**
(43) Date of publication of application: **11.03.2026**
(21) Application number: 25192564.0
(22) Date of filing: 29.07.2025
(51) Int. Cl.: G06V 10/82, G06Q 40/02, G06V 10/70, G06V 10/94, G06V 20/52, G06V 20/58

(54) **SYSTEMS AND METHODS FOR REMOTE PROCTORING**

(30) Priority: 06.09.2024 US 202463691760 P; 10.12.2024 US 202418975694
(71) Applicant: IDEMIA IDENTITY & SECURITY USA LLC, Reston, VI 20190 (US)
(72) Inventor: GAO, Xiao, Reston, 20190 (US); KARADAG, Firat, Reston, 20190 (US); DESHPANDE, Kaustubh, Reston, 20190 (US)
(74) Representative: IPS

(57) **Abstract**

A system and method for supervised remote proctoring includes an administrator device, a client device, a database, and an analysis module. During proctoring, a live video feed is captured from client device and sent to analysis module for processing. Analysis module performs behavioral analysis and object detection on received video footage and images. If an abnormality is detected by analysis module, an alert is generated and sent to administrator device to notify a proctor, and any information relating to the abnormality is sent to the database for storage and future reference.

## Description

### CROSS REFERENCE TO RELATED APPLICATIONS

This application claims the benefit of priority to U.S. Provisional Patent Application No. 63/691,760, filed September 6, 2024, the contents and disclosures of which are hereby incorporated by reference herein in their entireties.

### FIELD

The field of the disclosure relates generally to systems and methods for remote proctoring and more specifically, to systems and methods for AI-assisted remote proctoring systems for self-enrollment processes.

### BACKGROUND

Enrollment processes are increasingly becoming self-guided and the need for remote proctoring of enrollment processes is rising. There is a need for a robust and effective remote proctoring solution tailored for self-enrollment, especially in the background check industry. Sufficient proctoring is needed to ensure a secure and accurate enrollment process. Proctoring agents require the capability to monitor, detect, alert, and document any anomalous activities in real-time during the enrollment process.

Historically, solutions predominantly depended on manual monitoring by proctor agents through direct visual observation and evaluation of live video feeds. While some existing systems may have incorporated AI technologies, these primarily featured basic face recognition and object detection functionalities with strong focus towards exam proctoring. Existing systems were generally limited to recognizing a narrow set of features and lacked sophisticated behavioral analysis tools. Previous solutions exhibited limited accuracy and reliability, lacked advanced behavioral analysis, were inefficient during real-time monitoring, had inadequate integration of multiple biometrics, included poor data management for future investigations, and exhibited limited multi-session capability.

Moreover, previous solutions did not implement designated abnormality detection rules specifically formulated for the livescan context. Additionally, existing solutions fail to capitalize on the latest advancements including APIs which efficiently utilize a device's Graphics Processing Unit (GPU) in a browser setting, which facilitate the direct deployment of AI models in browsers, enhancing processing speed and real-time analysis capabilities while reducing setup complexity.

A lightweight solution that can assist proctors with monitoring, detection, alert, and documentation of enrollment process anomalies for multiple simultaneous enrollment sessions is desirable.

### BRIEF DESCRIPTION

One aspect includes a supervised proctoring system may include at least one processor in communication with at least one memory. The processor is configured to receive at least one video feed from at least one camera; detect, using a first machine learning component, at least one image abnormality in a frame of the at least one video feed; detect, using a second machine learning component, at least one behavioral abnormality in a segment of the video feed; display, using an administrator device, the at least one video feed; and transmit an alert to the administrator device upon detecting at least one abnormality.

Advantageously, the detecting at least one image abnormality is based on comparing at least one measured value to at least one threshold value.

Advantageously,the at least one measured value includes at least one of: a facial detection, an object detection, a hand detection, an emotion detection, a pose detection, or an eye gaze detection.

Advantageously, detecting at least one behavioral abnormality is based on:
generating a predicted frame of the at least one video feed based on a previous frame;
receiving an actual frame from the at least one video feed;
determining a difference value between the actual frame and the predicted frame; and
comparing the difference value to a threshold value.

Advantageously, the second machine learning component comprises a long-short term memory network, and wherein detecting at least one behavioral abnormality further includes referencing at least one previous segment of the video feed.

Advantageously, the at least one processor is further configured to train the second machine learning component on at least one training data including one or more example enrollment processes, where the training further includes altering the at least one training data with at least one of: downsizing, grayscaling, manual data review, and consecutive frame selection.

Advantageously, the at least one processor is further configured to:
display, using an administrator device, the at least one video feed, wherein displaying the at least one video feed further includes:
drawing a bounding box around an area in which an abnormality is detected;
generating text defining a bounding box based on a type of the abnormality; and
displaying the bounding box and text using the administrator device.

Advantageously, the at least one processor is further configured to:
store one or more unaddressed alerts into a queue;
store, using a database, at least one abnormality information about at least one detected abnormality as stored abnormality data; and
send a record of stored abnormality data to the administrator device.

Advantageously, the alert includes abnormality information associated with the at least one abnormality and the alert is displayed on the administrator device.

One aspect includes at least one non-transitory computer-readable storage medium with instructions stored thereon that, in response to execution by at least one processor, cause the at least one processor to: detect, using a first machine learning component, at least one image abnormality in a frame of the at least one video feed; detect, using a second machine learning component, at least one behavioral abnormality in a segment of the video feed; display, using an administrator device, the at least one video feed; and transmit an alert to the administrator device upon detecting at least one abnormality.

Advantageously, the detecting at least one image abnormality is based on comparing at least one measured value to at least one threshold value.

Advantageously, the at least one measured value includes at least one of: a facial detection, an object detection, a hand detection, an emotion detection, a pose detection, or an eye gaze detection.

Advantageously, detecting at least one behavioral abnormality is based on:
generating a predicted frame of the at least one video feed based on a previous frame;
receiving an actual frame from the at least one video feed;
determining a difference value between the actual frame and the predicted frame; and
comparing the difference value to a threshold value.

Advantageously, the second machine learning component comprises a long-short term memory network, and wherein detecting at least one behavioral abnormality further includes referencing at least one previous segment of the video feed.

Advantageously, the at least one processor is further configured to train the second machine learning component on at least one training data including one or more example enrollment processes, where the training further includes altering the at least one training data with at least one of: downsizing, grayscaling, manual data review, and consecutive frame selection.

Advantageously, the at least one processor is further configured to:
display, using an administrator device, the at least one video feed, wherein
displaying the at least one video feed further includes:
   drawing a bounding box around an area in which an abnormality is detected;
   generating text defining a bounding box based on a type of the abnormality; and
   displaying the bounding box and text using the administrator device.

Advantageously, the at least one processor is further configured to: store one or more unaddressed alerts into a queue; and store, using a database, at least one abnormality information about at least one detected abnormality as stored abnormality data.

Advantageously, the at least one processor is further configured to:
send a record of stored abnormality data to the administrator device.

Advantageously, the alert includes abnormality information associated with the at least one abnormality and the alert is displayed on the administrator device.

One aspect includes a method for autonomous proctoring implemented by at least one processor in communication with at least one memory. The method includes receiving at least one video feed from at least one camera; detecting, using a first machine learning component, at least one image abnormality in a frame of the at least one video feed; detecting, using a second machine learning component, at least one behavioral abnormality in a segment of the video feed; displaying, using an administrator device, the at least one video feed; and transmitting an alert to the administrator device upon detecting at least one abnormality.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
FIG. 1 is a block diagram illustrating an example embodiment of a system for remote proctoring;
FIG. 2A is a schematic block diagram illustrating an example embodiment of an object detection pipeline for remote proctoring;
FIG. 2B is a continuation of the schematic block diagram of FIG. 2A.
FIG. 3A is a schematic block diagram illustrating an example embodiment of a behavioral analysis pipeline for remote proctoring;
FIG. 3B is a continuation of the schematic block diagram of FIG. 3A; and
FIG. 4 is a flowchart showing a method of remote proctoring.

### DETAILED DESCRIPTION

The disclosed systems and methods provide for improved proctoring of a self-enrollment process. These systems and methods may be implemented in locations where a self-enrollment process is regularly and repeatedly performed, such as at security checkpoints (airports, border crossings, government buildings, etc.).

The disclosed system and methods include a web-based AI-driven proctoring solution tailored for the self-enrollment process for background checks, which incorporates advanced object detection and behavioral analysis AI models. This platform empowers proctor agents to efficiently identify and monitor fraudulent or unusual activities through comprehensive analytics, including facial, hand, and head pose detection, alongside facial landmark and expression analysis. The system employs a set of specific abnormality detection rules tailored for live scan applications. Furthermore, the system also leverages live video streams to detect anomalous behaviors by analyzing sequential actions over time, allowing for a comprehensive assessment of behavior patterns that may not be evident from individual frames alone. The system features an integrated alert mechanism that records all detected anomalous activities in a database for subsequent review and investigation. Additionally, this system supports simultaneous monitoring of multiple self-enrollment sessions, significantly enhancing agent productivity.

It should be understood that any values and thresholds described herein may be different in various implementations of the self-enrollment proctoring system, or even in different instances of the process performed by a same self-enrollment proctoring system. The example values, thresholds, and computations provided herein may optimize the precision and accuracy of any determinations and may further optimize the computational loading of the processor on which the module is implemented, but the disclosed systems and methods may operate with various other parameters without departing from the scope of the disclosure. The examples that follow, with respect to the figures, are illustrative and should not be construed in a limiting manner.

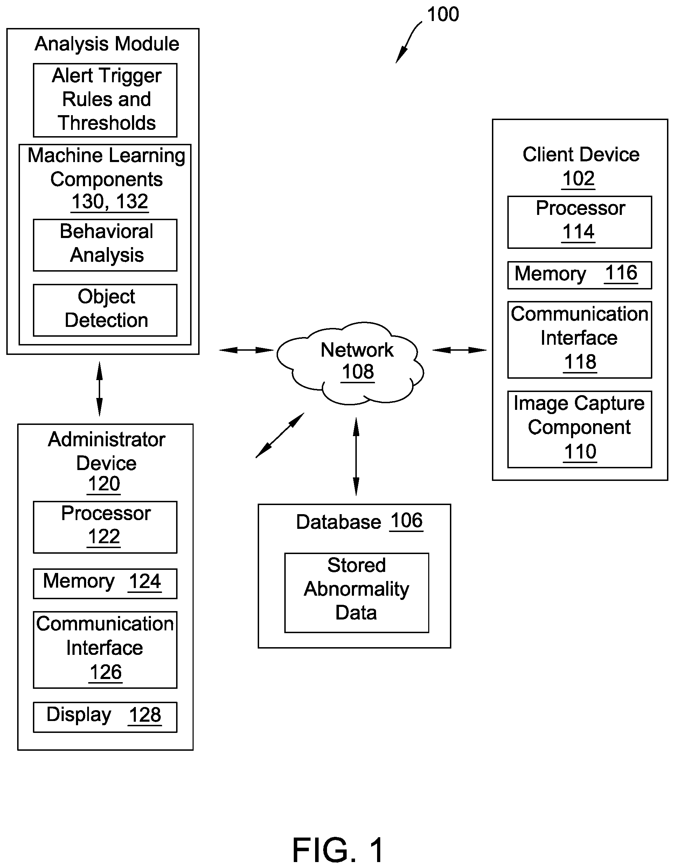

FIG. 1 is a block diagram illustrating an example embodiment of a system 100 for remote proctoring, in particular, using an AI-assisted and proctor-supervised enrollment process. In the example embodiment, system 100 includes a client device 102, an administrator device 120, an analysis module, machine learning components 130, 132, and a database 106. In some embodiments, the system 100 may be a non-supervised system.

In the example embodiment, client device 102 may be any device and may be operated by a user at a location where a self-enrollment process is regularly performed, such as a security checkpoint, a government building, or any other location. Client device 102 may include a least one image capture device, such as one or more cameras. In other embodiments, client device 102 includes a personal computing device, such as a mobile smart phone, tablet, laptop computer, and the like. In some embodiments, client device 102 may be a security kiosk. Client device 102 includes an image capture component 110, such as a scanning component, one or more cameras, and the like. In some embodiments, image capture component 110 may include multiple cameras for capturing videos feeds in multiple formats, such as standard (16:9, 60-80 degrees), wide-angle (16:9, 90-120 degrees), and fisheye (16:9, 180 degrees panoramic) to ensure a comprehensive view of the enrollment environment, facilitating detailed observation and effective monitoring.

Client device 102 further includes a processor 114, a memory 116, and a communication interface 118. As described herein, processor 114 executes instructions stored on memory device 116 to implement one or more modules, one or more processes, or portions of processes, for remote proctoring, as described herein. In the example embodiment, client device 102 employs communication interface 118 to transmit images and video through network 108 for processing and analysis. Communication interface 118 may be any wired and/or wireless communication interface that facilitates communication between client device 102 and administrator device 120 over a network 108, where network 108 may include a wide-area-network, a local-area-network, the Internet, and/or any other collection of networked computing devices. In some embodiments, communication interface 118 may also facilitate wireless communications using any of a variety of wireless protocols, such as Wi-Fi, BLUETOOTH, cellular, NFC, and/or other protocol(s) in the radio frequency (RF) spectrum. Client device 102 may include a microphone.

In the example embodiment, administrator device 120 is a computer system that facilitates multi-window proctoring display, as well as display of one or more determinations by the analysis module and machine learning components 130, 132. For example, administrator device 120 may display one or more video feeds containing color-coded bounding boxes and text markings produced by analysis module. Multi-window proctoring display allows an administrator to view and proctor more than one self-enrollment session simultaneously. Administrator device 120 includes a processor 122 and a memory device 124. As described herein, processor 122 executes instructions stored on memory device 124 to implement one or more processes, or portions of processes, for self-enrollment proctoring. Administrator device may be located at an enrollment or proctoring site, or may be located remotely from the location at which the enrollment takes place.

Administrator device 120 also includes a communication interface 126 for communication, via network 108, with other components or devices connected to network 108. For example, administrator device 120 receives image and/or video for display and review from client device 102 and machine learning components 130, 132, and transmits information regarding any detected anomalies to database 106, via communication interface 126.

In one embodiment, administrator device 120 includes a display 128, such as a screen, a computer monitor, television, or other display device. Display 128 may be configured to show or display multiple video feeds simultaneously. Display 128 may be configured to display information from machine learning components 130, 132 as text, bounding boxes, or other markers on video feeds. Administrator device 120 may display the at least one video feed received from client device 102 to a proctor or administrator of the device using the display 128.

Database 106 may be in operable communication with network 108 and configured to store one or more data regarding a detected abnormality. For example, database 106 may receive information regarding any abnormalities detected during a self-enrollment session. Stored abnormality data may include images, video segments, timestamps, proctor and applicant identifiers, or any other information or data related to a proctoring session. Stored abnormality data may be used by proctors or investigators for further review of flagged abnormalities to make more accurate determinations regarding the enrollment process. When an abnormality is first detected, the abnormality data may be sent to database 106 and stored, including an association between the applicant and the proctor session. In some embodiments, when a new abnormality is detected for an applicant, system 100 may reference stored abnormality data for one or more similar abnormalities associated with the same applicant. If similar stored abnormality data is found, system 100 may associate the similar stored abnormality data with the new abnormality, and upon association, send a link or reference to administrator device 120 containing the record of similar stored abnormality data with the newly detected abnormality.

Analysis module may include machine learning components 130, 132, and alert trigger and rule thresholds. Analysis module may be in operable communication with network 108 and other devices or components connected to network 108. In some embodiments, analysis module may be implemented on administrator device 120. Analysis module may be configured to receive at least one video feed from at least one camera or image capture component 110 of client device 102. Analysis module uses machine learning components 130, 132 to conduct a behavioral analysis and object detection on received video feeds to check for abnormalities.

Abnormality detection may be performed by analysis module by comparing at least one measured value from behavioral analysis and object detection to at least one threshold value from the alert trigger rules and thresholds. If the at least one measured value exceeds the at least one threshold value, an abnormality is considered detected, and an alert may be generated and sent to administrator device 120. Further upon detection of an abnormality, analysis module may send any images, video segments, or other information associated with a detected abnormality to the database for storage and future review by administrators. For example, analysis module may detect, using a first machine learning component 130, at least one image abnormality in a frame of the at least one video feed, and further may detect, using second machine learning component 132, at least one behavioral abnormality in a segment of the video feed. In some embodiments, the alert includes abnormality information associated with the detected abnormality, such as images, video segments, bounding boxes, or other information associated with the detected abnormality. Information about the detected abnormality may be transferred directly to administrator device 120 alongside the alert. In some embodiments, the alert includes a link to the information associated with the detected abnormality, for example, a link to stored abnormality information in database 106. Alerts and alert information, including images and bounded boxes associated with the alert, may be displayed on administrator device 120 as alerts are generated or may be displayed as an administrator interacts with the alert, such as if alerts are placed in a queue for review.

Upon detecting at least one abnormality, analysis module may transmit an alert to the administrator device 120. In some embodiments, analysis module may filter one or more subsequent alerts for repeated abnormalities within a period of time, and store any alerts that remain unaddressed by an administrator into a queue. For example, if a user's hands remain outside a designated area, only one alert may be generated when the user's hands first exit the designated area, and a new alert is not generated each frame the user's hands remain outside the area to avoid duplicate alerts for the same detection. Alerts may also be generated based on an adjustable duration, where a detected duration of an abnormality is compared to a threshold duration to determine if an alert should be generated. For example, a proctor or administrator may set a hand detection threshold duration at two seconds. If an applicant's hands are detected outside a designated area for less than two seconds, no alert will be generated. If applicant's hands are detected outside the designated area for two or more seconds, an alert is generated, as the threshold duration value has been reached. The duration of each alert condition may be adjustable by proctors and administrators (e.g. hand detection, face detection, and unauthorized object detection may each be configured with individual threshold durations).

Analysis module may draw a bounding box around an area in which an abnormality is detected, generate text defining a bound box based on a type of the abnormality, and send the bounding box and text to the administrator device 120 to be displayed to a proctor. Bounding boxes and text may be overlayed onto video feeds received from client device 102.

In some embodiments, analysis module may be deployed in a browser environment. Deployment in a browser environment reduces backend server load and decentralizes processing to administrator devices 120. Browser deployment thus enhances system scalability, ensures data security by processing sensitive information locally, and is beneficial for administering multiple self-enrollment processes simultaneously with oversight from a single proctor. An example implementation of this employment may include using an API capable of utilizing a GPU of administrator device 120 to deploy machine learning components 130, 132 directly in a browser. In some embodiments, analysis module may be deployed on local backend servers to enhance computational efficiency. In other embodiments, analysis module may be implemented as a proctor-side application to provide control over resource allocation and usage, such that machine learning components 130, 132 are hosted directly on administrator device 120.

Machine learning components 130, 132 may include a first machine learning component 130 and a second machine learning component 132. In some embodiments, the use of more than two machine learning components is contemplated. Machine learning components 130, 132 may be adapted to receive at least one video feed from at least one camera and perform object detection and behavioral analysis on video footage and images received to detect at least one image abnormality.

First machine learning component 130 may include a convolutional neural network and may be pre-trained or may undergo one or more additional trainings specific to the self-enrollment process. An example of a pre-trained model that may be used is "You Only Look Once" (YOLO). Models such as YOLO are effective for object detection in a real-time environment to process images quickly and accurately.

First machine learning component 130 may be configured to receive a frame of at least one video feed and perform object detection on the received frame. Object detection may include hand detection, face detection, head pose estimation, facial landmark detection, eye gaze detection, and/or unauthorized object detection. Once a detection is made to receive at least one measured value, an alert trigger rule and/or threshold is applied to determine the presence of an abnormality in the frame of the at least one video feed. The at least one measured value is compared to at least one threshold value to determine if an abnormality is present, and if an alert should be sent to the administrator device 120 based upon the detected abnormality. First machine learning component 130 may perform object detection during live monitoring. Threshold values may be predetermined or may be adjustable by an administrator during the proctoring process to allow proper detection even accounting for unexpected changes to the proctoring environment.

In some embodiments, first machine learning component 130 may be configured to perform hand detection. First machine learning component 130 may perform hand detection on each video frame or image received from client device 102. First machine learning component 130 identifies hands within the received image, locates the position of the hands, and marks the hands with a bounding box. For example, when a hand is detected in the scene, a white bounding box is drawn to indicate the margin of the designated allowed area. If a hand is detected within the white bounding box, a green bounding box is drawn around the location of the detected hand. If a hand is detected as leaving the allowed area, a red bounding box is drawn around the detected hand. The position of the hands is then compared to at least one threshold value to determine if the applicant's hands are within a defined region. When the applicant's hands are detected as having left the defined region, an alert may be generated and sent to administrator device 120. Defined region may be predefined or may be adjustable based on one or more factors, such as by being broader or narrower at different stages of the enrollment process.

In some embodiments, first machine learning component 130 may be configured to perform face detection. First machine learning component 130 may perform face detection on each video frame or image received from client device 102. First machine learning component 130 may identify a face within the received image, locate the position of face, and mark the face with a bounding box. If more than one face is detected, an alert may be generated and sent to administrator device 120. Analysis module may draw a bounding box around each detected face and color code bounding boxes based on comparing the measured value of faces in frame to a threshold value of faces in frame. For example, if only one face is detected and the threshold value is one, a green bounding box may be drawn around the face. If more than one face is detected, all faces are marked with red bounding boxes to indicate an abnormality.

In some embodiments, first machine learning component 130 may be configured to perform head pose estimation. First machine learning component 130 may perform head pose estimation on each video frame or image received from client device 102. The head pose may be estimated using one or more head pose vectors to indicate which direction a user is looking. Head pose vectors may be stored in sequence to allow the system 100 to monitor and detect unusual or suspicious patterns or sequences of head movements or that may suggest attempts at deception or other abnormalities. Threshold values establishing maximum ranges for yaw, pitch, and roll vectors of a head may be defined, and an alert generated and sent to administrator device 120 if a measured value of yaw, pitch, or roll exceeds the threshold value. Vectors for yaw, pitch, and roll may be color coded and drawn on a bounding box containing a face. For example, yaw, pitch, and roll may be drawn as red, green, and blue vectors, respectively.

In some embodiments, first machine learning component 130 may be configured to perform eye gaze detection. First machine learning component 130 may track a user's eyes to estimate where the user is looking, or may calculate an eye gaze trajectory based on one or more other parameters. The measured value of the eye gaze trajectory may be compared to a threshold value defining an acceptable range, and if the measured value exceeds the threshold value, an alert may be generated and sent to administrator device 120.

In some embodiments, first machine learning component 130 may be configured to perform unauthorized object detection. First machine learning component 130 may identify and track one or more objects in a received video feed. The type and position of the objects may be used as at least one measure value and compared to at least one threshold value to determine the presence of an unauthorized object within an unauthorized area. Upon detection of an unauthorized object or an object in an unauthorized area, first machine learning component 130 may generate and send an alert to administrator device 120. For example, if a cell phone is detected within an unauthorized space of the proctoring area, an alert is sent to administrator device 120. In some embodiments, first machine learning component 130 may further track the movement of unauthorized objects in the environment.

In some embodiments, first machine learning component 130 may be configured to perform facial landmark detection. First machine learning components 130 may pinpoint key facial landmarks, for example, the eyes, nose, and mouth. Facial landmark detection enhances detection accuracy and improves facial analysis. In some embodiments, first machine learning component 130 may detect specific facial landmarks to cover essential features of the face, including the eyes, nose, mouth, and jawline. In some embodiments, first machine learning component 130 may draw a white dot on each detected facial landmark to aid in real-time monitoring and analysis.

In some embodiments, first machine learning component 130 may be configured to perform emotion detection. First machine learning component 130 may detect emotions by analyzing a user's facial expressions. In some embodiments, emotion detection may be based upon facial landmark detection. In some embodiments, emotion detection may be based upon one or more emotional theories, such as Ekman's Basic Emotions Theory. Analysis module may trigger an alert to administrator device 120 upon detection of an abnormal emotion, such as anger, surprise, or sadness. Analysis module may draw an emotion indicator associated with each detected face. For example, a text label may be drawn to indicate a detected facial expression or emotion, such as sadness, anger, or surprise. Emotion indicators may be color coded, such as green for normal emotions or expressions and red for abnormal emotions or expressions.

In some embodiments, analysis module may include voice-to-text capability. Analysis module may include a third machine learning component to transcribe spoken utterances or responses from a user to text and transmit the text to administrator device 120 or database 106. In some embodiments, analysis module may include a third machine learning component including a Large Language Model (LLM) based chatbot. The chatbot may be trained or fine-tuned on a dataset of business documents using Retrieval-Augmented Generation (RAG) techniques to ensure accurate and efficient responses to common queries. The chatbot may use the voice-to-text transcription to automatically respond to spoken questions or send an alert to administrator device 120 if abnormal speech is detected, for example, if unintelligible speech is detected or if an administrator response is required. In some embodiments, the LLM-based chatbot may translate a transcription or utterance between languages. In some embodiments, translation may be performed by a fourth machine learning component.

Second machine learning component 132 may include a convolutional long short term memory unit (LSTM). LSTM may include an autoencoder-like structure. Second machine learning component 132 receives at least one video feed from client device 102. The at least one video feed may include at least one video frame or a video section from client device 102. Second machine learning component 132 analyzes received video sections to determine if a behavioral abnormality is present, and if a behavioral abnormality is detected, second machine learning component 132 sends an alert or notification to administrator device 120. Second machine learning component 132 may operate to detect behavioral abnormalities during live monitoring.

Second machine learning component 132 may be trained to distinguish between normal and abnormal sequences of actions. A training dataset may be used for training. For example, second machine learning component 132 may be trained on one or more example instances of the enrollment process. Some of the example instances may represent a normal enrollment process with no abnormalities, and some sample instances may intentionally have abnormalities to train the second machine learning component 132 to identify abnormal instances or patterns of behavior. Example instances of the enrollment process may include sample data collected from sample enrollment sessions in self-enrollment process at, for example, a kiosk setup. Example instances may also include artificial training instances created by developers or administrators for the purposes of training second machine learning component 132 to better identify specific behaviors and abnormalities.

The training dataset may go through post-processing before being used for training second machine learning component 132. Post-processing may include, for example, downsizing frames, grayscale conversion, quality control, and frame selection. Downsizing may include resizing frames to match a model's input size. Grayscale conversion may include converting frames to grayscale to simplify input data and improve focus on key features. Quality control may include manual or automated review of frames to ensure consistency and confirm the presence or absence of abnormal behaviors in the training data. Frame selection may include limiting input training data to a selected sequence of consecutive frames to maintain temporal consistency.

An example training method is described herein as follows. First, a training dataset undergoes post-processing as described above. The processed dataset is then fed into the second machine learning component 132 and trained with twenty iterations. The second machine learning component 132 is optimized against mean squared error to ensure accuracy, and weights from a best iteration are saved. The second machine learning component 132 is then converted to a web-browser compatible format and deployed in a browser environment for deployment in a web-based self-enrollment system.

Second machine learning component 132 may use or reference previous frames or sections of a video feed to improve detection of anomalous behavior. For example, if a video section of a length of five seconds is analyzed, second machine learning component 132 may further reference one or more previously stored segments of the video feed when making a determination of the presence of abnormal behavior. Second machine learning component 132 may capture and store sequential frames, compiling the frames as previous segments of the video feed for use in detecting at least one behavioral abnormality by referencing at least one previous segment of the video feed. Second machine learning component 132 may analyze behavior over time to detect an abnormality. For example, if at least one measured value of a behavior exceeds at least one threshold value, an alert may be generated and sent to administrator device 120. Behaviors may be tracked over time, such that a single instance of a behavior may be viewed as normal, but repeated instances, sequences, or specific actions of the same behavior may be indicative of an abnormality.

Second machine learning component 132 may use a reconstruction loss process. Reconstruction loss may include, upon receiving an actual frame from the at least one video feed, generating a predicted frame of the at least one video feed based on at least one previous frame, determining a difference value between the actual frame and the predicted frame, and comparing the difference value to a threshold value. For example, at a given time t seconds, second machine learning component 132 generates a predicted frame for time t + 1 using at least one previous input frame. Second machine learning component 132 receives an actual frame from the at least one video feed at time t + 1. Second machine learning component 132 then determines a reconstruction error as a difference value between the actual frame and the predicted frame. The difference value is compared to a threshold value, and if the difference value exceeds the threshold value, an alert may be generated. In some embodiments, second machine learning component 132 may draw a color-coded indicator on the actual frame to display the presence or absence of an abnormality to the administrator.

During proctoring, administrator device 120 may toggle on or off one or more of the above described functions implemented by analysis module. For example, a proctor may turn off hand detection entirely, may turn off only visual bounding box displays of hand detection, or may select any combination of parameters associated with each individual object or behavioral detection.

When administrator device 120 receives an alert or notification, the alert may be placed in a queue. The proctor may review alerts as they arrive and decide whether to confirm the alert or dismiss the alert, or may review alerts in the queue at a later time if the proctor's attention is needed elsewhere. When an alert is generated by system 100, information about the alert may be sent to database 106 and stored as stored abnormality data. Stored abnormality data may include any frames of the at least one video feed containing an abnormality, timestamps showing the time the abnormality occurred during the proctoring session, information about the proctor and applicant involved in the abnormality, and any other data useful or necessary for future review of the abnormality.

A proctor may decide to terminate a self-enrollment session early based on notifications of abnormal behavior. When a proctor decides to terminate a session, administrator device 120 may prompt the proctor to select any supporting video feed frames containing abnormalities as detected by the analysis module. Selected frames may be transmitted to database 106 and stored as evidence. First machine learning component 130 may identify and store individual frames that correspond to critical moments or actions within the video feed from the proctoring session to assist the proctor with the review process.

In some embodiments, system 100 may be a non-supervised system where no proctor directly monitors a live feed during the enrollment process by an applicant. Abnormality detections made by analysis module may still trigger alerts that are placed in a queue for further review, or the associated abnormality information may be sent directly to database 106 for storage. The non-supervised system may include a threshold enrollment score. Each abnormality detection during an enrollment session may contribute to a detected enrollment score. When the detected enrollment score meets or exceeds the threshold enrollment score, system 100 may take one or more actions, including at least one of: stopping the enrollment session prematurely, generating and sending an alert to administrator device 102, or storing detected abnormality information in database 106.

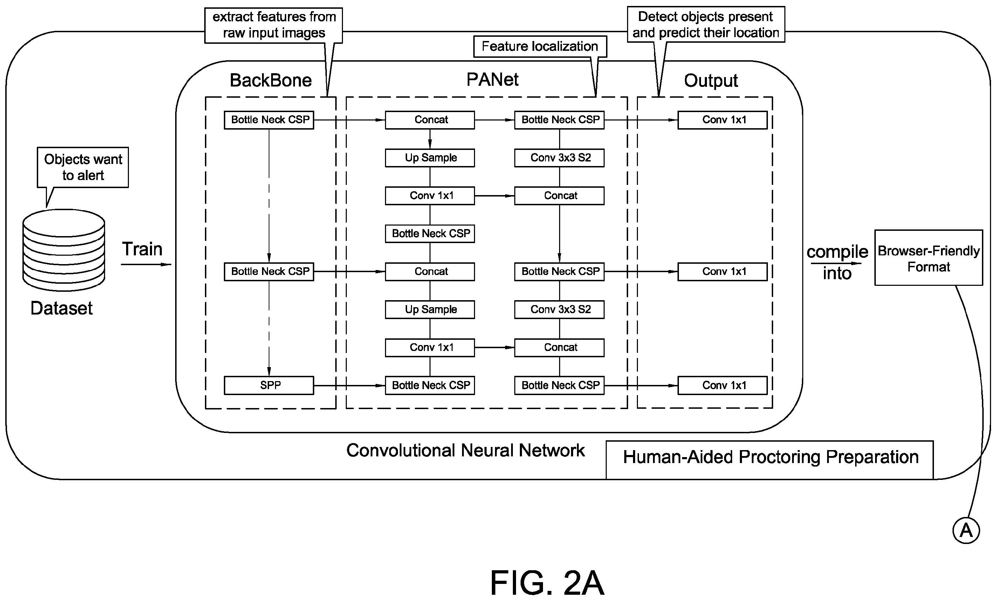

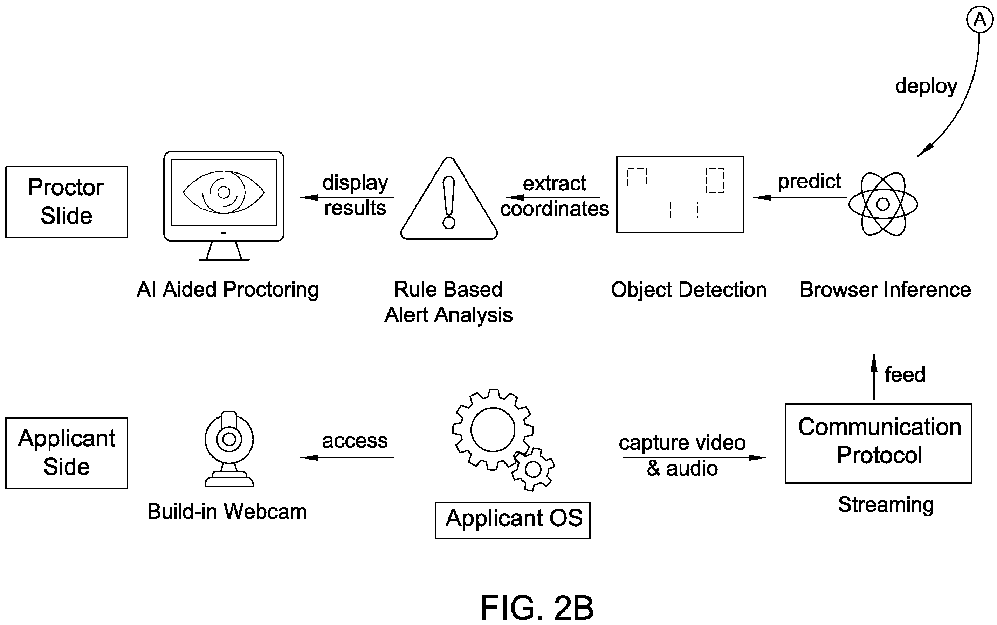

FIGs. 2A and 2B shows a block diagram of an example embodiment of a system and method for remote proctoring demonstrating object detection. A YOLO model is trained on a dataset of objects and features to be detected, and compiled into a browser-friendly model format using an intermediary machine learning framework. The browser-friendly model is deployed onto a browser interface. The browser interface receives captured video and audio from a client device containing input devices, such as at least one camera and/or at least one microphone. Client device data may be accessed from the client operating system services, and streamed and/or sent to the browser for inference using a computer communications protocol. The browser model predicts an object detection and displays one or more color-coded bounding boxes around detected objects. Coordinates and object types are extracted from the object detection and fed into an analysis module for comparison against one or more threshold values. If an unauthorized object or an object in an unauthorized area is detected, an alert is generated and the alert and results are displayed on an administrator device for review by a proctor. Any alerts generated may also generate information about the alert and store that data in a separate database for future review.

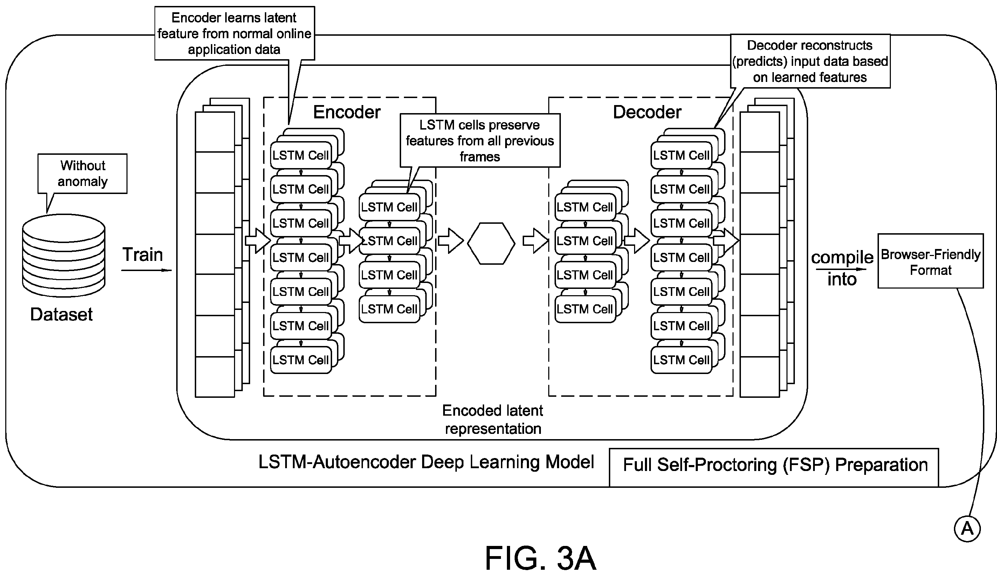

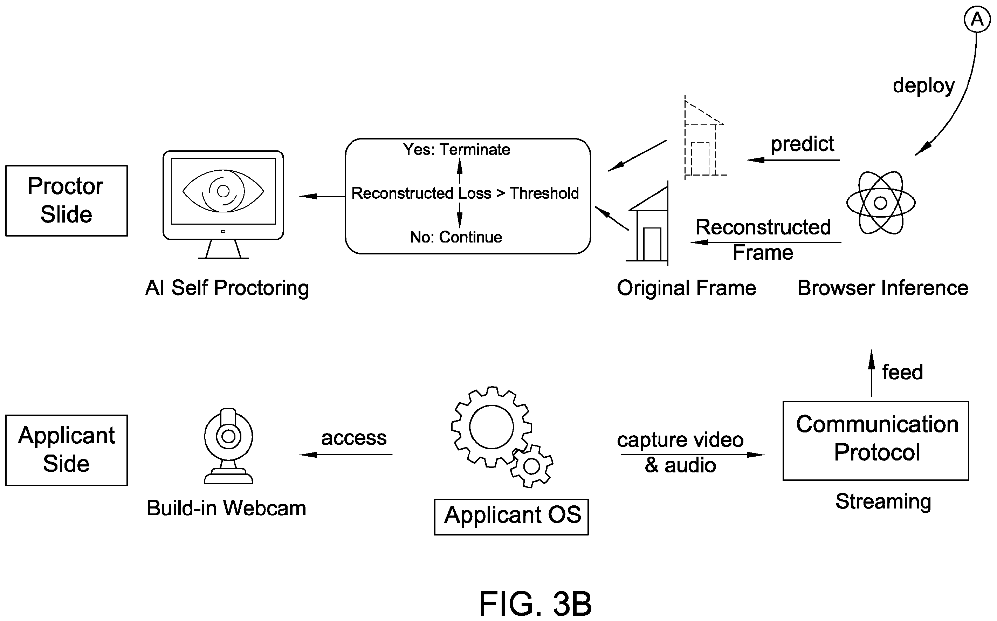

FIGs. 3A and 3B shows a block diagram of an example embodiment of a system and method for remote proctoring demonstrating behavioral detection. A LSTM-autoencoder deep learning model is trained on a dataset without anomalies to learn what "normal" behavior looks like during the enrollment process. The encoder learns latent features from normal online application data, the LSTM cells preserve features from previous frames, and the decoder reconstructs input data based on learned features. The LSTM model is compiled into a browser friendly model format with an intermediary machine learning framework and deployed onto a browser. The browser interface receives captured video and audio from a client device containing input devices, such as at least one camera and/or at least one microphone. Client device data may be accessed from the client device operating system, sent and/or streamed to the browser for inference using a computer communications protocol. The LSTM then receives an image frame, and predicts a reconstructed frame based on at least one previous frame. The reconstructed frame is compared to the received frame to determine a reconstruction loss. If the reconstruction loss is greater than a threshold, an alert may be generated and sent to an administrator device, or the proctoring session may be immediately terminated. If the reconstruction loss is less than a threshold, the proctoring continues as normal. The LSTM model is capable of processing both spatial information within each frame of a received video feed to perform functions such as object detection, as well as temporal information across sequences of frames to perform function such as behavioral analysis. The autoencoder structure compresses and reconstructs input data, as described above, to obtain the reconstruction loss value. This functionality of compression and reconstruction assist the LSTM model in recreating the normal data seen during training to focus on the essential features included in normal behavior exhibited during an enrollment process. This allows the LSTM model to more accurately detect abnormalities, being especially suited to identifying abnormalities that develop over a period of time, such as sequences or patterns of abnormal behavior.

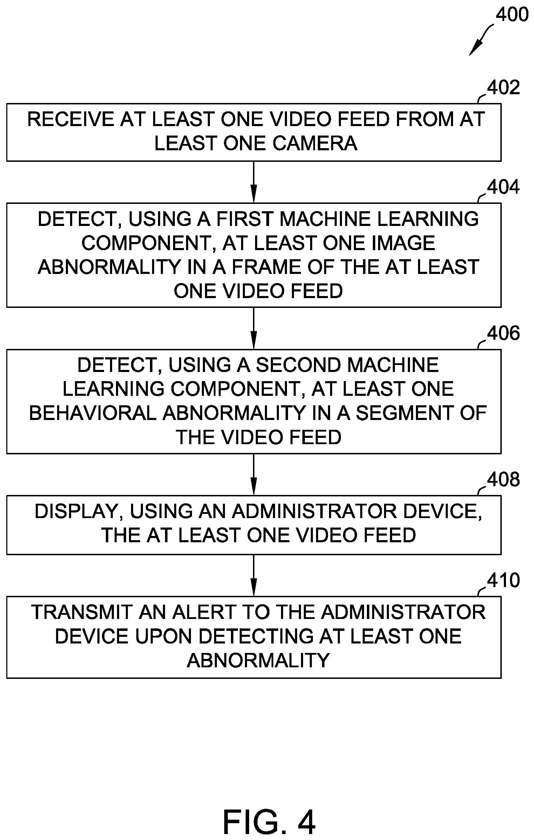

FIG. 4 shows an example method for supervised remote proctoring. Method 400 includes receiving 402 at least one video feed from at least one camera and detecting 404, using a first machine learning component, at least one image abnormality in a frame of the at least one video feed. Method also includes detecting 406, using a second machine learning component, at least one behavioral abnormality in a segment of the video feed. Method further includes displaying 408, using an administrator device, the at least one video feed. Method further includes transmitting an alert to the administrator device upon detecting at least one abnormality.

The systems and methods described herein may be implemented using computer programming or engineering techniques including computer software, firmware, hardware or any combination or subset thereof, wherein the technical effects and specific improvements to the technology and technical field may include one or more of: (i) improved accuracy and reliability of the precision and consistency of monitoring and detection of behaviors and objects for proctoring procedures; (ii) improved accuracy and consistency of abnormality detection of a proctored session through combination of multiple machine learning components; (iii) proctoring systems and methods that are device-agnostic and applicable across device variations; (iv) improved data management for detected fraudulent or anomalous activities in a proctoring system; (v) multi-session support for simultaneous monitoring of multiple self-enrollment sessions; (vi) maintaining human oversight with AI assistance for proctoring environments.

In the foregoing specification and the claims that follow, a number of terms are referenced that have the following meanings.

As used herein, an element or step recited in the singular and preceded with the word "a" or "an" should be understood as not excluding plural elements or steps, unless such exclusion is explicitly recited. Furthermore, references to "example implementation" or "one implementation" of the present disclosure are not intended to be interpreted as excluding the existence of additional implementations that also incorporate the recited features.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here, and throughout the specification and claims, range limitations may be combined or interchanged. Such ranges are identified and include all the sub-ranges contained therein unless context or language indicates otherwise.

Disjunctive language such as the phrase "at least one of X, Y, or Z," unless specifically stated otherwise, is generally understood within the context as used to state that an item, term, etc., may be either X, Y, or Z, or any combination thereof (e.g., X, Y, and/or Z). Thus, such disjunctive language is generally not intended to imply certain embodiments require at least one of X, at least one of Y, and at least one of Z to each be present. Additionally, conjunctive language such as the phrase "at least one of X, Y, and Z," unless specifically stated otherwise, should be understood to mean any combination of at least one of X, at least one of Y, and at least one of Z.

Some embodiments involve the use of one or more electronic processing or computing devices. As used herein, the terms "processor" and "computer" and related terms, e.g., "processing device," "computing device," and "controller" are not limited to just those integrated circuits referred to in the art as a computer, but broadly refers to a processor, a processing device, a controller, a general purpose central processing unit (CPU), a graphics processing unit (GPU), a microcontroller, a microcomputer, a programmable logic controller (PLC), a reduced instruction set computer (RISC) processor, a field programmable gate array (FPGA), a digital signal processing (DSP) device, an application specific integrated circuit (ASIC), and other programmable circuits or processing devices capable of executing the functions described herein, and these terms are used interchangeably herein. These processing devices are generally "configured" to execute functions by programming or being programmed, or by the provisioning of instructions for execution. The above embodiments are examples only, and thus are not intended to limit in any way the definition or meaning of the terms processor, processing device, and related terms.

The various aspects illustrated by logical blocks, modules, circuits, processes, algorithms, and algorithm steps described above may be implemented as electronic hardware, software, or combinations of both. Certain disclosed components, blocks, modules, circuits, and steps are described in terms of their functionality, illustrating the interchangeability of their implementation in electronic hardware or software. The implementation of such functionality varies among different applications given varying system architectures and design constraints. Although such implementations may vary from application to application, they do not constitute a departure from the scope of this disclosure.

Aspects of embodiments implemented in software may be implemented in program code, application software, application programming interfaces (APIs), firmware, middleware, microcode, hardware description languages (HDLs), or any combination thereof. A code segment or machine-executable instruction may represent a procedure, a function, a subprogram, a routine, a subroutine, a module, a software package, a class, or any combination of instructions, data structures, or program statements. A code segment may be coupled to, or integrated with, another code segment or an electronic hardware by passing or receiving information, data, arguments, parameters, memory contents, or memory locations. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the claimed features or this disclosure. Thus, the operation and behavior of the systems and methods were described without reference to the specific software code being understood that software and control hardware can be designed to implement the systems and methods based on the description herein.

When implemented in software, the disclosed functions may be embodied, or stored, as one or more instructions or code on or in memory. In the embodiments described herein, memory includes non-transitory computer-readable media, which may include, but is not limited to, media such as flash memory, a random access memory (RAM), read-only memory (ROM), erasable programmable read-only memory (EPROM), electrically erasable programmable read-only memory (EEPROM), and non-volatile RAM (NVRAM). As used herein, the term "non-transitory computer-readable media" is intended to be representative of any tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal. Alternatively, a floppy disk, a compact disc - read only memory (CD-ROM), a magneto-optical disk (MOD), a digital versatile disc (DVD), or any other computer-based device implemented in any method or technology for short-term and long-term storage of information, such as, computer-readable instructions, data structures, program modules and sub-modules, or other data may also be used. Therefore, the methods described herein may be encoded as executable instructions, e.g., "software" and "firmware," embodied in a non-transitory computer-readable medium. Further, as used herein, the terms "software" and "firmware" are interchangeable and include any computer program stored in memory for execution by personal computers, workstations, clients and servers. Such instructions, when executed by a processor, cause the processor to perform at least a portion of the methods described herein.

Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

The systems and methods described herein are not limited to the specific embodiments described herein, but rather, components of the systems and/or steps of the methods may be utilized independently and separately from other components and/or steps described herein.

Although specific features of various embodiments of the disclosure may be shown in some drawings and not in others, this is for convenience only. **In** accordance with the principles of the disclosure, any feature of a drawing may be referenced and/or claimed in combination with any feature of any other drawing.

This written description uses examples to provide details on the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A proctoring system for self-enrollment comprising at least one processor in communication with at least one memory, wherein the at least one processor is configured to:
receive at least one video feed from at least one camera;
detect, using a first machine learning component, at least one image abnormality in a frame of the at least one video feed;
detect, using a second machine learning component, at least one behavioral abnormality in a segment of the video feed; and
transmit an alert to an administrator device upon detecting at least one abnormality.

2. The proctoring system according to the preceding claim , wherein the detecting at least one image abnormality is based on comparing at least one measured value to at least one threshold value.

3. The proctoring system according to the preceding claim , wherein the at least one measured value includes at least one of: a facial detection, an object detection, a hand detection, an emotion detection, a pose detection, or an eye gaze detection.

4. The proctoring system according to any of the preceding claims , wherein detecting at least one behavioral abnormality is based on:
generating a predicted frame of the at least one video feed based on a previous frame;
receiving an actual frame from the at least one video feed;
determining a difference value between the actual frame and the predicted frame; and
comparing the difference value to a threshold value.

5. The proctoring system according to any of the preceding claims , wherein the second machine learning component comprises a long-short term memory network, and wherein detecting at least one behavioral abnormality further includes referencing at least one previous segment of the video feed.

6. The proctoring system according to any of the preceding claims , wherein the at least one processor is further configured to train the second machine learning component on at least one training data including one or more example enrollment processes, where the training further includes altering the at least one training data with at least one of: downsizing, grayscaling, manual data review, and consecutive frame selection.

7. The proctoring system according to any of the preceding claims , wherein the at least one processor is further configured to:
display, using an administrator device, the at least one video feed, wherein displaying the at least one video feed further includes:
drawing a bounding box around an area in which an abnormality is detected;
generating text defining a bounding box based on a type of the abnormality; and
displaying the bounding box and text using the administrator device.

8. The proctoring system according to any of the preceding claims , wherein the at least one processor is further configured to:
store one or more unaddressed alerts into a queue;
store, using a database, at least one abnormality information about at least one detected abnormality as stored abnormality data; and
send a record of stored abnormality data to the administrator device.

9. The proctoring system according to claim 7, wherein the alert includes abnormality information associated with the at least one abnormality and the alert is displayed on the administrator device.

10. At least one non-transitory computer-readable storage medium with instructions stored thereon that, in response to execution by at least one processor, cause the at least one processor to:
receive at least one video feed from at least one camera;
detect, using a first machine learning component, at least one image abnormality in a frame of the at least one video feed;
detect, using a second machine learning component, at least one behavioral abnormality in a segment of the video feed; and
transmit an alert to an administrator device upon detecting at least one abnormality.

11. The at least one non-transitory computer-readable storage medium according to claim 10, wherein the detecting at least one image abnormality is based on comparing at least one measured value to at least one threshold value.

12. The at least one non-transitory computer-readable storage medium according to claim 11, wherein the at least one measured value includes at least one of: a facial detection, an object detection, a hand detection, an emotion detection, a pose detection, or an eye gaze detection.

13. The at least one non-transitory computer-readable storage medium according to claim 10, wherein the at least one processor is further configured to:
store one or more unaddressed alerts into a queue; and
store, using a database, at least one abnormality information about at least one detected abnormality as stored abnormality data.

14. The at least one non-transitory computer-readable storage medium according to claim 13, wherein the at least one processor is further configured to:
send a record of stored abnormality data to the administrator device.

15. A method for autonomous proctoring implemented by at least one processor in communication with at least one memory, the method comprising:
receiving at least one video feed from at least one camera;
detecting, using a first machine learning component, at least one image abnormality in a frame of the at least one video feed, where the detecting is based on comparing at least one measured value to at least one threshold value;
detecting, using a second machine learning component, at least one behavioral abnormality in a segment of the video feed; and
transmitting an alert to an administrator device upon detecting at least one abnormality.
